Europäisches Patentamt

European Patent Office

Office européen des brevets

(11) Veröffentlichungsnummer: **0 218 783**
**A2**

# (12) EUROPÄISCHE PATENTANMELDUNG

(21) Anmeldenummer: 86107324.5

(22) Anmeldetag: 30.05.86

(51) Int. Cl.4: **B64D 1/02**

(30) Priorität: 28.09.85 DE 3534720

(43) Veröffentlichungstag der Anmeldung:
22.04.87 Patentblatt 87/17

(84) Benannte Vertragsstaaten:
**DE FR GB**

(71) Anmelder: **DORNIER GMBH**
**Postfach 1420**
**D-7990 Friedrichshafen 1(DE)**

(72) Erfinder: **Oberdörffer, Elmar, Dipl.-Ing.**
**Echbeck 24**
**D-7799 Heiligenberg(DE)**
Erfinder: **Eschenbacher, Rudolf, Dipl.-Ing.**
**Garwiedenweg 2**
**D-7778 Markdorf(DE)**

(74) Vertreter: **Landsmann, Ralf, Dipl.-Ing.**
**Kleeweg 3**
**D-7990 Friedrichshafen 1(DE)**

(54) Einrichtung zur Aufnahme und Freigabe von Lasten an Fluggeräten.

(57) Einrichtung zur Aufnahme von Lasten an Fluggeräten, wobei die Lasten (4) von einer Tragvorrichtung (3) aufgenommen sind, die in einem nach unten offenen, abschließbaren Schacht (2) innerhalb der Fluggerätezelle (1) vertikal verstellbar ist und wobei die Tragvorrichtung (3) in einer Ausfahrstellung arretierbar ist, aus der die Lasten (4) außer in Richtungen nach unten auch senkrecht zur Vertikalen des Fluggerätes absetzbar sind.

Fig. 1

EP 0 218 783 A2

## Einrichtung zur Aufnahme und Freigabe von Lasten an Fluggeräten

Die vorliegende Erfindung betrifft eine Einrichtung zur Aufnahme und Freigabe von Lasten an Fluggeräten.

Bei Einrichtungen der genannten Art, werden Waffen, Abwurfmunition wie Bomben, Raketen sowie Behälter für die Aufnahme und den Ausstoß von Streumunition oder dergleichen mittels außerhalb der Fluggerätekontur bzw. der Außenhaut der Rumpfstruktur fest vorgesehene Halterungen aufgenommen. Von Bombenflugzeugen her ist es bekannt, im Flugzeugrumpf Schächte für die Aufnahme von vertikal nach unten abwerfbare Bomben vorzusehen, wobei die Bombenschächte durch seitlich ausschwenkbare Klappen abschließbar sind.

Die an Tragvorrichtungen außerhalb der Zellenstruktur bzw. der Zellenverkleidung mitgeführten Abwurflasten vergrößern in erheblichen Maße den Radarquerschnitt z.B. eines Luftangriffsflugzeuges. Ferner ist auch das Luftwiderstandverhalten des Fluggerätes durch die Abwurflasten und die Lastaufnahmevorrichtungen ungünstig. Folgen des erhöhten Luftwiderstandes sind hoher Treibstoffverbrauch in Verbindung mit einer Beeinträchtigung der erreichbaren Fluggeschwindigkeiten.

Aufgabe der Erfindung gegenüber dem Bekannten ist es, eine Aufnahmeeinrichtung für abwerfbare Lasten von Fluggeräten aus so auszubilden, daß der Radarquerschnitt und gleichzeitig der Luftwiderstand zumindest über den größten Bereich einer Flugmission wesentlich verringert und die Einrichtung am Einsatzort neben dem Absetzen von Lasten nach unten auch ein Absetzen bzw. Abstoßen der Lasten in oder entgegen der Flugrichtung sowie in seitlicher Richtung erlaubt. Ferner soll die Einrichtung die Aufnahme unterschiedlichster Arten von Lasten bieten und die Beladung am Boden in kürzester Zeit ermöglichen.

Die Lösung der gestellten Aufgabe ist wie durch die Merkmale der Ansprüche angegeben, gelöst.

Eine erfindungsgemäß ausgebildete Einrichtung weist den wesentlichen Vorteil auf, daß der Radarquerschnitt zumindest über den größten Bereich einer Flugmission wesentlich ver ringert ist, daß infolge des Einschlußes, sowohl der Trag-Tragvorrichtung als auch der Lasten selbst, eine erhebliche Verringerung des Luftwiderstandes erzielt wird, und daß die Tragvorrichtung in Verbindung mit entsprechend angepaßten Verriegelungen wahlweise die Aufnahme unterschiedlichster Lasten erlaubt. Die Tragvorrichtung kann zur Aufnahme von Schienen für das Abschießen von Raketen oder dergleichen in oder entgegen der Flugrichtung, von Verriegelungen für die Freigabe vertikal abzuwerfender Bomben oder Verriegelungen zur Aufnahme von Behälter für das seitliche Ausstossen von Streumunition dienen.

In der Zeichnung ist ein Ausführungsbeispiel gemäß der Erfindung dargestellt. In Verbindung mit der Zeichnung und der nachfolgenden Beschreibung ist ein beispielsweiser erfindungsgemäßer Aufbau der Einrichtung näher beschrieben.

Es zeigt:

Figur 1 die Einrichtung in einem Ausschnitt aus dem unteren Bereich eines Fluggeräterumpfes, schematisiert in einem senkrechten Längsschnitt,

Figur 2 eine Stirnansicht nach Figur 1 und

Figur 3 eine Ansicht gemäß Figur 1 und 2 von unten.

Bei dem gezeigten Ausführungsbeispiel ist mit 1 die Zelle eines Fluggerätes, mit 2 ein Schacht innerhalb der Flug gerätezelle 1 und mit 3 eine im Schacht 2 vertikal beweglich angeordnete Trägerplatte bezeichnet. Die Trägerplatte dient zur Aufnahme von hier nicht dargestellten Verriegelungsgliedern, die mit entsprechenden Gegengliedern an den aufzunehmenden Lasten 4 zusammenwirken.

Der Schacht 2 weist senkrechte Seitenwände 5 und ebenfalls vertikale Stirnwände 6 auf. Ferner ist der Schacht 2, bezogen auf die Fluggerätezelle nach unten offen, wobei die Schachtöffnung die Bezugsziffer 7 trägt.

Die Trägerplatte 3 ist im Bereich der vier Ecken an vertikal gerichteten Führungsschienen 10 mittels Führungsflächen und Gegenflächen 11 bzw. 11' parallel verschiebbar.

Zur Vertikalverstellung der Trägerplatte 3 sind an beiden Plattenenden Stellantriebe 15 vorgesehen, die einerseits an der Fluggerätezelle 1 und andererseits an der Trägerplatte 3 angreifen.

Als Stellantrieb 15 dienen bei der gezeigten Ausführung vier je aus zwei als Faktoren-Flaschenzüge 16 bzw. 16' ausgebildete Einheiten. Die Flaschenzüge 16 , 16' sind über eine am Flaschenzugseil 20 angreifende Antriebsseilrolle 19 an einem Antriebsmotor 18 angeschlossen.

Die Flaschenzugeinheiten 16 bzw. 16' jedes Stellantriebes 15 dienen außer zur Verstellung auch der Halterung bzw. Fixierung der Trägerplatte 3 in sämtlichen Parallelverschiebungsstellungen im Hinblick auf die wechselnden Fluglagen inner halb einer Flugmission und die daraus resultierenden Belastungen der Trägerplatte 3. Die Ausbildung der Flaschenzüge 16, 16' sieht vor, bezogen auf die Vertikalerstreckung des Schachtes 2 an den vier Ecken der Trägerplatte 3 oberhalb und unterhalb an der Fluggerätezelle 1 um Achsen frei drehbare Seilrollen 24 bzw 24' und an der Trägerplatte 3 frei drehbare Seilrollen 24".

Die Seilrollen 24" weisen dabei Doppelrillen 25 bzw. 25' für die Umschlingung durch die Seilstränge S₁ bzw. S₂ des Flaschenzugseiles 20 auf. Es sind ferner Umlenkrollen 28 sowie Seilbefestigungen 30, 30' für die Befestigung der beiden Enden des Flaschenzugseiles 20 der eine Einheit bildenden Flaschenzüge 16, 16' an der Fluggerätestruktur vorgesehen.

Der Antriebsmotor 18 mit seiner Antriebsseiltrommel 19 ist über eine Seilspannvorrichtung 34 an der Fluggerätezelle 1 aufgenommen. Der Motor 18 mit der Seiltrommel 19 wird getragen von einem in einem Gehäuse 35 gegen Federungen (nicht dargestellt) beweglichen Trägerarm 36, wobei das Gehäuse 35 mittels einer Befestigung 37 an der Fluggerätezelle 1 festgelegt ist.

Unterhalb sind an der Trägerplatte 3 hier nicht dargestellte Aufnahmeglieder angeordnet, die zur lösbaren Befestigung z.B. von Abschußschienen für Raketen, Schlösser für den Abwurf von Bomben oder zur Aufnahme von Behältern, welche Streumunition für den gegenüber der Flugrichtung seitlichen Ausstoß tragen, dienen. Ferner sind an der Fluggerätezelle 1 Verriegelungen 45 bzw. 46 angeordnet, die zur lösbaren Fixierung der Trägerplatte 3 an der Struktur 1 in den beiden Bewegungsendstellungen vorgesehen sind.

Die Schachtöffnung 7 ist verschließbar vorgesehen. Zum Abschluß dient ein in Führungsschienen 50 längs der Flugzeugzelle 1 beweglicher Rolladen 51, der mit seiner Unterseite bündig mit der Außenkontur der Fluggerätezelle 1 ist.

Der in Längsrichtung des Fluggerätes verstellbare Rolladen 51 ist auf-bzw. abwickelbar auf bzw. von Walzen 54 bzw. 55 im Bereich der Stirnwände 6 des Schachtes 2 und über Umlenkwalzen 56, 57 geführt. Die Walzen 54 bzw. 55 werden angetrieben von Antriebsmotoren, die mit entgegengesetzter Drehrichtung arbeiten und wechselseitig wirksam schaltbar sind. Vorzugsweise wird der Rolladen 51 aus der geschlossenen Stellung in die Öffnungsstellung in Flugrichtung des Fluggerätes bewegt, so daß die Luftströmung daran gehindert ist, über die Rolladenvorderkante in den Schacht 2 einzuströmen und den Rolladen 51 zu beschädigen.

Die Wirkungsweise der beschriebenen Einrichtung ist nachfolgend beschrieben.

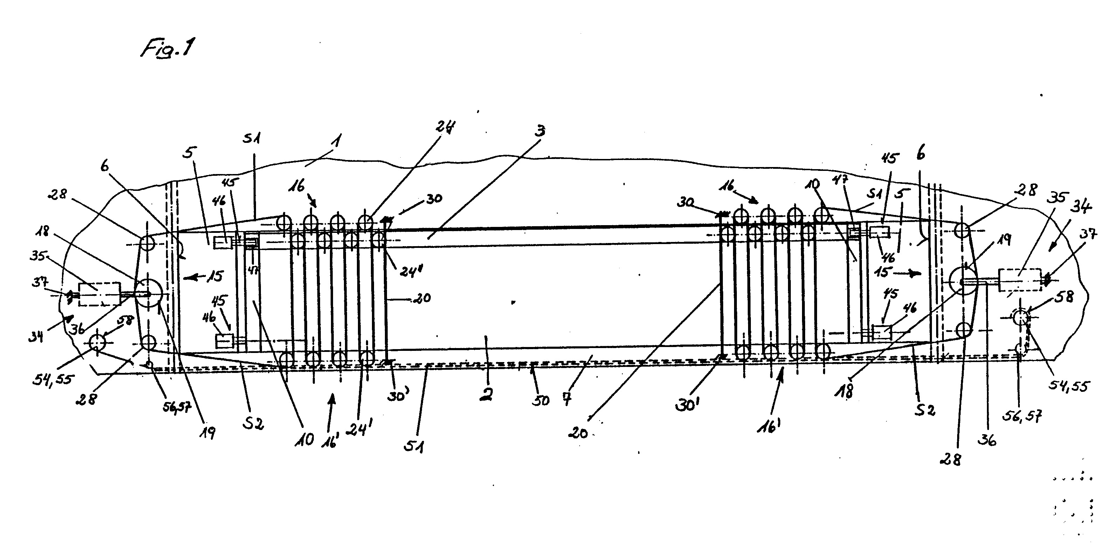

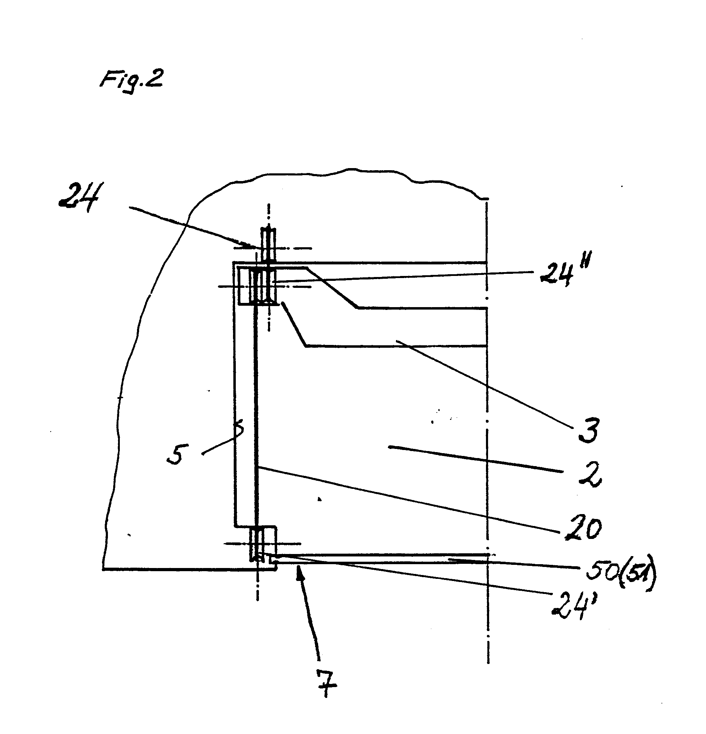

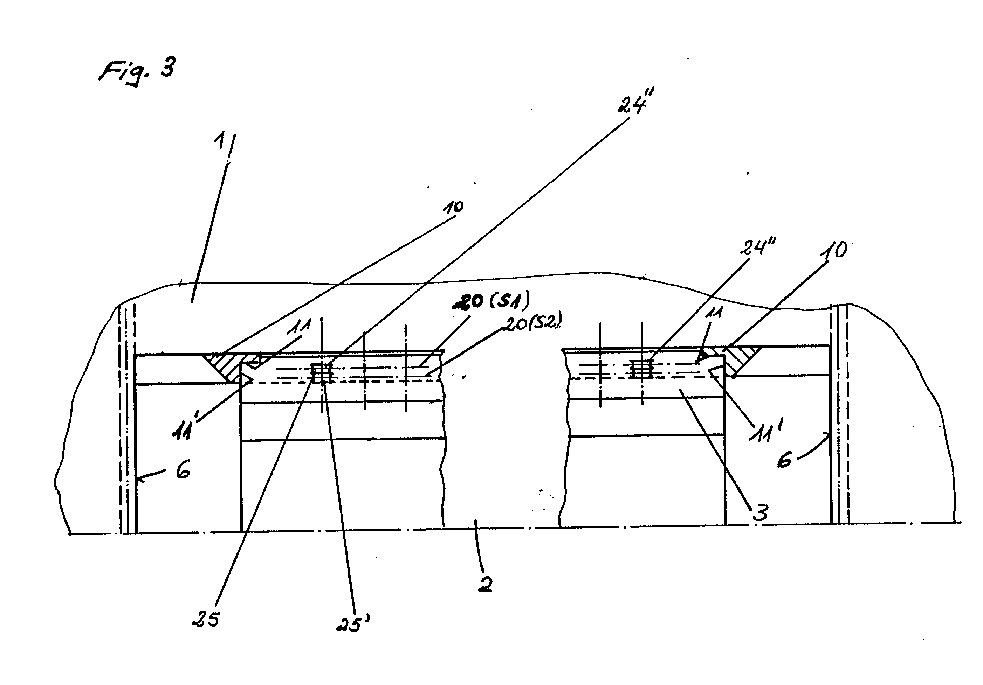

Aus der in Figur 1 bis 3 dargestellten Einfahrstellung wird die Trägerplatte 3 mittels der Stellantriebe 15 in Verbindung mit den Flaschenzugeinheiten 16, 16' über die Führungen 10 im Schacht 2 nach unten verstellt. Mittels der Flaschenzugeinheiten 16 bzw. 16' wird die Trägerplatte 3 während des Verstellvorganges gegen ungewollte Vertikal-oder Kippbewegungen zwangsgeführt. Dies wird erreich, in dem die Seile 20 der Flaschenzüge 16, 16' einer Flaschenzugeinheit infolge der entgegengesetzen Umschlingung der Rollen 24" an der Trägerplatte 3 diese in jeder Verstellage zwangsläufig halten. In der Endausfahrstellung wird die Trägerplatte 3 mittels der Glieder 45, 46 verriegelt, wobei sich die an der Trägerplatte 3 angeordneten, nicht dargestellten Führungsschienen, Verriegelungen oder dergleichen für die Aufnahme der Lasten 4 in einer solchen Position außerhalb der Rumpfkontur befinden, aus der ein Absetzen der Lasten 4 außer in Richtungen nach unten auch in Richtung senkrecht zur Vertikalen des Fluggerätes möglich ist.

Damit lassen sich z. B. über die Führungsschienen an der Trägerplatte 3 unter Freigabe von Verriegelungen Flugkörper bzw. Raketen in oder gegen die Flugrichtung des Fluggerätes absetzen. Ferner erlaubt die Ausfahrlage der Trägerplatte bzw. der zugehörigen Glieder für die Aufnahme und Führung der Lasten 4, z.B. bei der Aufnahme von Behältern für Streumunition, einen Ausstoß der Munition aus den Behältern nach beiden Seiten, bezogen auf die Flugrichtung und außerdem ist auch das Absetzen von Lasten, z.B. von Bomben, im Ausfahr zustand oder auch im Einfahrzustand der Trägerplatte 3 mittels der gezeigten Ausführungsform der Einrichtung möglich.

Die Freigabe der Schachtöffnung 7 durch den Rolladen 51 erfolgt so, daß der Rolladen 51 seine Öffnungsbewegung und seine Schließbewegung gegen die Flugrichtung des Fluggerätes ausführt. Diese Art der Verstellung verhindert, daß die umgebenden Strömung von vorn über die Vorderkante des Rolladens 51 in den noch nicht völlig geöffneten bzw. noch nicht vollständig geschlossenen Schacht 2 während des Öffnungs-bzw. Schließvorganges einzuströmen und den Rolladen 51 zu beschädigen vermag.

Es ist auch eine Ausbildung für die Trägerplatte denkbar, bei der die Trägerplatte um Längsachsen parallel zur Flugzeuglängsachse - schwenkbar ist, und zwar so, daß die an der Trägerplatte aufgenommenen Lasten in der einen Endstellung innerhalb des Schachtes liegen und die Schachtöffnung durch die Rückseite der Trägerplatte abgeschlossen ist und in der Ausfahrstellung die Trägerplatte eine Lage einnimmt, in der die Lasten außerhalb der Rumpfkontur des Fluggerätes auch zum seitlichen Absetzen der Lasten liegen.

**Ansprüche**

1. Einrichtung zur Aufnahme von Lasten an Fluggeräten,

**gekennzeichnet** dadurch, daß

-der Fluggeräterumpf (1) einen vertikal nach unten offenen Schacht (2) aufweist, daß

-im Schacht (2) eine Tragvorrichtung (3) für die Aufnahme von Lasten (4) angeordnet ist, daß

-die Tragvorrichtung (3) Trag-bzw. Auslöseglieder für die lösbare Aufnahme der Lasten (4) aufweist, daß

-für die Tragvorrichtung (3) Verstellmittel (15; 16, 16') zu Verstellung im Schacht (2) aus einer Einfahrposition in eine Ausfahrposition vorhanden sind, daß

-die Tragvorrichtung (3) in Ausfahrposition eine Lage einnimmt, in der die Trag-bzw. Auslöseglieder für die Lasten (4) außerhalb der Fluggeräteaußenkontur liegen und aus der die Lasten (4) außer in Richtungen nach unten in Richtungen senkrecht zur Vertikalen des Fluggerätes absetzbar sind und daß

-den Schacht (2) wahlweise abdeckende Verschlußmittel (50, 51; 54, 55) vorhanden sind.

2. Einrichtung nach Anspruch 1, dadurch gekennzeichnet, daß die Tragvorrichtung für die aufzunehmenden Lasten (4) durch eine Trägerplatte (3) gebildet ist, die über Stellantriebe (15; 16, 16') und Führungsglieder (10) im Schacht (2) parallel verstellbar ist.

3. Einrichtung nach Anspruch 1 oder 2, dadurch gekennzeichnet, daß die Stellantriebe (15) durch Antriebsmotore (18) und an diese angeschlossene, sich an der Fluggerätezelle (1) abstützende und an der Trägerplatte (3) angreifende Flaschenzugeinheiten (16, 16') gebildet sind.

4. Einrichtung nach Anspruch 1 bis 3, dadurch gekennzeichnet, daß zur beweglichen Aufhängung der Trägerplatte (3) an der Zelle (1) jede der Einheiten, bezogen auf die vertikale Erstreckung des Schachte (2), aus einen einen unteren und einen oberen Flaschenzug (16, 16') gebildeten Flaschenzugeinheit besteht und daß die Seilstränge - (S₁ bzw. S₂) des Flaschenzugseiles (20) gemeinsam die Rollen (24") an der Trägerplatte (3) entgegengesetzt umschlingen.

5. Einrichtung nach Anspruch 1 bis 4, dadurch gekennzeichnet, daß sämtliche Stellantriebe (15) der Trägerplatte (3) zur Erzielung gleicher Verstellwege Synchronisierungen für Stellmotoren aufweisen.

6. Einrichtung nach Anspruch 1 bis 5, dadurch gekennzeichnet, daß die jeweils eine Einheit bildenden Flaschenzüge (16, 16') ein gemeinsames an beiden Enden an der Zelle (1) festes und über eine gemeinsame Antriebsrolle (19) geführtes Flaschenzugseil (20) aufweisen.

7. Einrichtung nach Anspruch 1 bis 6, dadurch gekennzeichnet, daß Verriegelungen (45; 46, 47) für die Verriegelung der Trägerplatte (3) in den beiden Endstellungen gegenüber der Fluggerätezelle (1) vorgesehen sind.

8. Einrichtung nach Anspruch 1 bis 7, dadurch gekennzeichnet, daß die Trägerplatte (3) gegen eine solche mit anderer Bestückung für die Lastaufnahme (40) an den Flaschenzügen (16, 16') auswechselbar angeordnet ist.

9. Einrichtung nach Anspruch 1 bis 8, dadurch gekennzeichnet, daß zum Abschluß des Aufnahmeschachtes (2) .ein aus quer zur Verstellrichtung gelenkig miteinander verbundenen Elementen bestehende und auf Walzen (54, 55) aufwickelbaren Abdeckung (51) vorgesehen ist.

10. Einrichtung nach Anspruch 1 bis 9, dadurch gekennzeichnet, daß die Verstellbewegung zur Freigabe der Schachtöffnung (7) in Flugrichtung erfolgt.

Fig.1

Fig.2

Fig. 3

0 218 783